(19) Europäisches Patentamt
European Patent Office
Office européen des brevets

(11) **EP 1 050 711 B1**

(12) **FASCICULE DE BREVET EUROPEEN**

(45) Date de publication et mention
de la délivrance du brevet:
**29.07.2009 Bulletin 2009/31**

(51) Int Cl.:
*F21V 8/00* (2006.01)    *G04B 19/30* (2006.01)

(21) Numéro de dépôt: **99109018.4**

(22) Date de dépôt: **07.05.1999**

(54) **Dispositif d'illumination orientée d'une surface par un guide à microprismes**

Vorrichtung zur orientierten Flächenbeleuchtung durch einen mikroprismatischen Leiter

Device for oriented surface illumination by a waveguide using microprisms

(84) Etats contractants désignés:
**CH DE FR GB IT LI**

(43) Date de publication de la demande:
**08.11.2000 Bulletin 2000/45**

(73) Titulaire: **ASULAB S.A.**
**CH-2501 Bienne (CH)**

(72) Inventeurs:
• **Teijido, Juan Manuel**
**2012 Auvernier (CH)**
• **Poli, Jean-Charles**
**2206 Les Geneveys-sur-Coffrane (CH)**

• **Grupp, Joachim**
**2003 Neuchâtel (CH)**
• **Herzig, Hans Peter**
**2000 Neuchâtel (CH)**

(74) Mandataire: **Rossand, Isabelle et al**
**ICB**
**Ingénieurs Conseils en Brevets**
**Faubourg de l'Hôpital**
**2001 Neuchâtel (CH)**

(56) Documents cités:
**EP-A- 0 860 755          WO-A-96/23166**
**GB-A- 2 324 599          US-A- 5 506 929**

**Description**

La présente invention a pour objet un dispositif d'illumination orientée d'une surface plane au moyen d'un guide optique plein, pourvu de microprismes dont un agencement particulier redresse les rayons lumineux issus d'au moins une source permettant d'injecter lesdits rayons au moins à l'une de ses extrémités, de façon à obtenir tout au long du guide une émergence rasante et uniforme par une face dirigée vers ladite surface à illuminer.

L'invention concerne plus particulièrement un tel dispositif pour l'illumination de surfaces de petites dimensions, tels que les dispositifs d'affichage d'appareils de mesure et les cadrans des pièces d'horlogerie.

On connaît déjà des dispositifs dans lesquels l'illumination d'une surface est obtenue par un guide optique fait d'un élément souple, en matière translucide ayant le plus souvent une section de forme générale rectangulaire. Un tel guide permet par réflexion totale interne (TIR) de conduire le long du guide la lumière injectée à une extrémité et d'extraire vers ladite surface à illuminer les rayons qui frappent à l'intérieur du guide la surface dirigée vers ladite surface à illuminer sous un angle inférieur à l'angle critique $\theta_c$, dont la valeur dépend de l'indice de réfraction n du matériau utilisé. Pour augmenter le nombre de rayons correspondant au critère précité, il est également proposé de revêtir les autres faces non dirigées vers la surface à illuminer avec un vernis blanc réfléchissant. De tels dispositifs correspondent par exemple à celui qui est décrit dans le brevet EP 0 860 755 pour l'éclairage artificiel du cadran d'une pièce d'horlogerie au moyen d'une diode. Ces dispositifs ont l'inconvénient d'avoir un rendement faible en raison des pertes par absorption sur les autres parois, et d'avoir une intensité lumineuse qui décroît au fur et à mesure qu'on s'éloigne de la source lumineuse.

Pour diminuer la perte d'énergie lumineuse, divers dispositifs proposent d'utiliser des microprismes qui travaillent soit en réflexion, soit en transmission. Lorsque les microprismes sont utilisés en réflexion, ils sont disposés sur une surface du guide perpendiculairement à sa ligne longitudinale de façon à renvoyer par réflexion totale interne les rayons incidents sur la face opposée par laquelle les rayons peuvent émerger pour illuminer une surface. Lorsque les microprismes sont utilisés en transmission, ils sont disposés perpendiculairement à la ligne longitudinale du guide sur la face par laquelle les rayons doivent émerger pour illuminer une surface. Cette dernière configuration correspond par exemple aux dispositifs décrits dans les brevets US 5,555,109 et EP 0 666 247. Que les microprismes soient utilisés en réflexion ou en transmission, on observera qu'ils sont toujours disposés sur des faces du guide sensiblement perpendiculaires à la surface à illuminer. Dans le cas d'un guide courbe, et notamment dans le cas d'un guide en forme d'anneau, la structuration des microprismes est rendue techniquement plus difficile, ce qui entraîne naturellement une augmentation du coût du dispositif d'illumination. On observera également que ces dispositifs de l'art antérieur n'apportent toujours pas une solution satisfaisante à l'orientation des rayons émergents vers la surface à illuminer. En effet, beaucoup de rayons sortent du guide directement vers l'observateur et l'éblouissent au lieu d'illuminer la surface.

La présente invention a pour but de pallier les inconvénients de l'art antérieur susmentionné en procurant un dispositif d'illumination d'une surface plane par un guide à microprismes, lesdits microprismes étant structurés dans une face plane du guide sensiblement parallèle à ladite surface selon un agencement permettant d'orienter les rayons émergents le long du guide en incidence rasante uniforme vers ladite surface,qui sera donc plus facile à observer grâce à une diminution de l'effet d'éblouissement.

A cet effet l'invention a pour objet un dispositif d'illumination orientée d'une surface plane par au moins une source lambertienne au moyen d'un guide optique plein formé d'une succession de blocs élémentaires propageant la lumière selon un axe Oz et comprenant au moins un microprisme, ledit guide étant réalisé en un matériau d'indice de réfraction n élevé. Cet indice de réfraction définit à l'intérieur du guide un cône de propagation de la lumière dont l'angle de révolution correspond à l'angle critique $\theta_c$. La section droite du guide peut avoir un contour quelconque, mais présente au moins un angle plan $\delta$ dont un côté engendre une première face plane du guide sensiblement parallèle à la surface à illuminer et dont l'autre côté engendre une deuxième face plane sensiblement perpendiculaire la surface à illuminer. Les autres surfaces engendrées par les autres parties de la section droite peuvent également contribuer à améliorer l'extraction de la lumière injectée, par exemple selon les techniques exposées en préambule, mais leur conformation ne concerne pas directement l'invention.

L'invention est en effet **caractérisée en ce que** les microprismes sont structurés en creux sur la première face du guide sensiblement parallèle à la surface à illuminer et en ce que chaque microprisme a une de ses facettes plane orientée vers la source lumineuse en étant inclinée vers la deuxième face plane du guide de façon à orienter le rayon moyen émergeant de ladite deuxième face selon un angle $\theta_1$ par rapport et vers ladite surface à illuminer. L'inclinaison de cette facette du microprisme considéré est définie d'une part par un angle $\alpha$ déterminé dans le plan de la première face du guide par une arête de ladite facette et par l'axe Oz de propagation de la lumière dans un bloc élémentaire, d'autre part par un angle $\overline{\gamma}$ déterminé dans le plan de la deuxième face du guide par le bord de ladite facette et par la direction normale à la surface à illuminer. Les angles $\overline{\alpha}$ et $\overline{\gamma}$ sont déterminés, d'une part à partir de l'indice de réfraction n du matériau utilisé pour le guide qui va déterminer à l'intérieur de guide l'angle $\theta_c/2$ du rayon moyen incident sur la facette du microprisme et d'autre part de l'angle d'incidence moyen $\theta_1$ choisi pour que les rayons émergents illuminent toute la surface considérée. Cet angle d'incidence moyen $\theta_1$ est évidemment fonction du choix fait pour les dimensions respectives du guide et de ladite surface à illuminer, et enfin de la valeur de l'angle plan $\delta$ de la section droite du guide.

Les valeurs des angles $\overline{\alpha}$ et $\overline{\gamma}$ peuvent également être calculés, en fonction des caractéristiques physiques précitées du dispositif, à partir de paramètres dérivés, tels que les cosinus directeurs des vecteurs des rayons lumineux réfléchis ou réfractés, lesdites valeurs étant reportées dans un référentiel orthogonal x, y, z parallèle à la section droite de chaque microprisme et à la surface à illuminer.

Il est possible de donner à l'angle plan δ de la section droite du guide au niveau de chaque microprisme une valeur quelconque de son choix, la valeur préférée étant Π/2, cette valeur étant également retenue pour une meilleure compréhension de la description détaillée qui va suivre.

Par rapport à cette valeur de référence (Π/2) l'angle δ peut varier d'environ -10° (sens trigonométrique), soit en maintenant la première surface strictement parallèle à la surface à illuminer, soit en maintenant la deuxième surface strictement perpendiculaire à la surface à illuminer. En d'autres termes, l'angle δ peut varier sensiblement entre 80° et 100°.

Comme indiqué précédemment, le guide peut être considéré, pour une meilleure compréhension de l'invention, comme une succession de blocs élémentaires $B_i$ rectilignes, pouvant comporter un ou plusieurs microprismes tels que définis ci-dessus et dont l'enchaînement peut former soit une ligne longitudinale quelconque, soit une ligne rectiligne, soit encore une ligne courbe régulière tel qu'un cercle. Dans le cas d'une ligne courbe, l'angle α est défini par rapport à la tangente au point considéré du guide.

Pour obtenir une illumination uniforme de la surface le long du guide, dans lequel il existe une réduction de l'intensité du flux lumineux à cause de la lumière éjectée, mais aussi à cause des pertes dues aux réflexions, aux absorptions par les faces "non actives", ainsi qu'à l'absorption propre du matériau utilisé pour former le guide, il est souhaitable selon un mode de réalisation préféré de l'invention de compenser cette diminution du flux lumineux par une densité des microprismes de plus en plus grande au fur et à mesure qu'on s'éloigne de la source lumineuse.

Selon un premier mode de réalisation préféré, les microprismes sont structurés sur toute la largeur du guide et leur nombre par bloc élémentaire $B_i$ augmente au fur et à mesure qu'on s'éloigne de la source lumineuse. Le bloc élémentaire le plus près de la source lumineuse comportera par exemple un microprisme, et celui qui est le plus éloigné en comportera quatre.

Selon un deuxième mode de réalisation préféré, chaque bloc élémentaire Bi comporte un seul microprisme, mais la longueur des microprismes augmente au fur et à mesure qu'on s'éloigne de la source lumineuse.

Ces deux modes de réalisation sont bien entendu compatibles entre eux, et il est possible de les mettre en oeuvre simultanément.

Les microprismes sont conformés sur la première face du guide par gravage direct ou indirect, tels qu'un usinage mécanique avec un outils diamanté approprié, une attaque à travers des masques en photorésist, par des moyens chimiques ou par des rayons lasers, lesdites techniques étant citées à titre d'exemples non limitatifs.

Il est également possible de produire lesdits microprismes par réplication à partir d'une matrice gravée qu'on adapte à une machine d'injection pour obtenir les guides par moulage, ou qu'on utilise pour estamper une surface dans laquelle on veut conformer lesdit microprismes. Quelle que soit la technique utilisée, les microprismes peuvent être conformés soit directement sur le guide, soit sur une plaque d'indice de réfraction sensiblement identique à celui du guide et ayant le même contour que la première face du guide, ladite plaque étant ensuite appliquée sur ladite première face, par exemple par collage.

Les microprismes ainsi formés peuvent être laissés en l'état, c'est-à-dire ne subir aucun traitement additionnel, et changer la direction du vecteur lumineux uniquement par réflexion totale interne. En fonction de leur angle d'incidence, les rayons qui s'échapperaient du guide par réfraction sur ladite facette peuvent en effet être réorientés à l'intérieur du guide en fonction de l'inclinaison qui aura été donnée à la deuxième facette de chaque microprisme.

Selon une variante de réalisation, qui permet d'augmenter le flux lumineux utile pour l'illumination de la surface, il est également possible de revêtir la facette de chaque microprisme orientée vers la source lumineuse d'un revêtement réfléchissant. Cet avantage est toutefois contrebalancé par le surcoût qui en résulte au niveau de la fabrication (revêtement sélectif d'une très petite surface) et par les pertes de flux lumineux dues à l'absorption par les surfaces réfléchissantes. En effectuant un revêtement total de la surface où sont structés les microprismes, on diminue un peu le surcoût de fabrication, mais augmente aussi les pertes par absorption des surfaces réfléchissantes. Le choix entre ces différents modes de réalisation dépend donc essentiellement des dimensions respectives du guide, des microprismes et de la surface à illuminer.

En ce qui concerne le positionnement de la source lumineuse, il peut être choisi parmi ceux connus de l'art antérieur, avec une source selon l'axe du guide, ou mieux avec deux sources disposées à chaque extrémité, le guide ayant alors une structuration de microprismes symétrique par rapport à son point médian. Il est également possible et avantageusement économique de disposer une source unique perpendiculairement à la surface à illuminer en regard d'un dièdre formé dans la première face du guide sensiblement parallèle à la surface de la surface à illuminer, ledit dièdre ayant un angle tel qu'il permette par réflexion totale interne d'injecter le flux lumineux dans deux demi-secteurs du guide. Le cône d'émission de la source étant formé de rayons lumineux ayant des angles d'incidence différents et pouvant être réfractés, donc perdus, selon un autre aspect de l'invention le dièdre sus-indiqué est remplacé par un double dièdre, voir un polydièdre formant par une succession d'éléments infinitésimaux une surface courbe.

Le dispositif d'illumination à microprismes qui vient d'être décrit permet d'illuminer tout type de surface. Toutefois, il trouve son application préférée dans l'illumination de surfaces de petites dimensions tels que les dispositifs d'affichage d'appareil de mesure et les cadrans de pièces d'horlogerie.

D'autres caractéristiques et avantages de la présente invention apparaîtront dans la description suivante de divers modes de réalisation, en référence aux dessins annexés dans lesquels :

- la figure 1 est une représentation partielle en perspective d'un dispositif d'illumination selon le mode le plus général de réalisation de l'invention;
- la figure 2 est une représentation en perspective agrandie de l'un des blocs formant le guide du dispositif représenté à la figure 1;
- les figures 3A et 3B représentent les projections du microprisme de la figure 2 respectivement dans les plans xz, yz et dans un plan normal à une arête du microprisme.
- la figure 3C représente la réflexion d'un rayon sur un microprisme;
- la figure 4 est une vue en perspective d'un dispositif d'illumination selon l'invention dans lequel le guide optique est un barreau rectiligne de section rectangulaire;
- la figure 4A est une représentation schématique en coupe de la figure 4, perpendiculairement à l'axe du guide;
- la figure 5 est une vue en perspective partiellement arrachée d'une montre pourvue d'un dispositif d'illumination selon l'invention dans lequel le guide est en forme d'anneau;
- la figure 5A est une coupe selon la ligne Va-Va de la figure 5;
- la figure 6 est une vue de dessus d'un autre mode de réalisation du guide représenté à la figure 5, et
- la figure 6A est une vue de côté selon la flèche VIa du guide de la figure 6 au niveau de la source lumineuse.

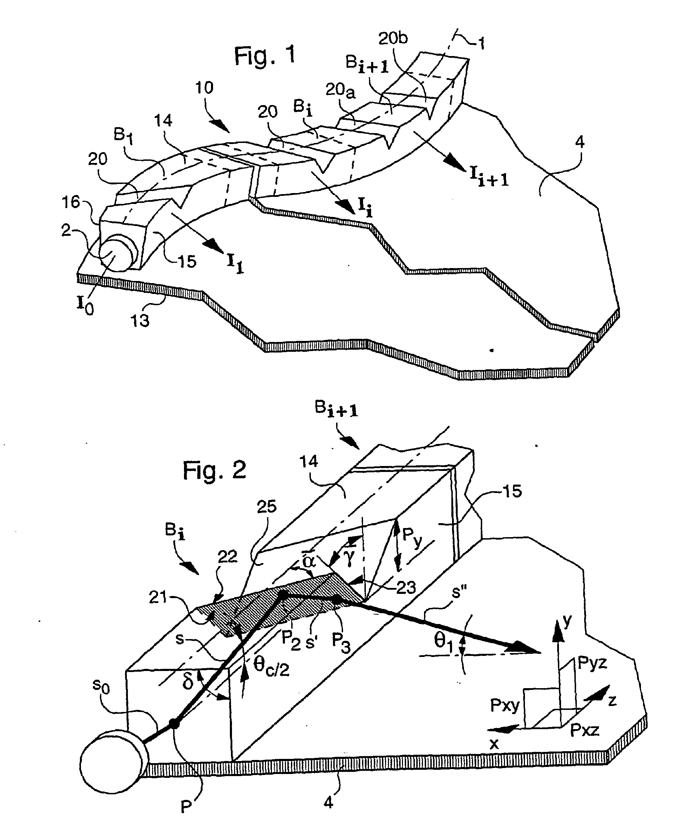

A la figure 1, on a représenté schématiquement en perspective une fraction d'un dispositif d'illumination d'une surface plane 4 par un guide optique plein à microprismes, désigné par la référence générale 10, au moyen d'une source lumineuse 2 disposée à l'une de ses extrémités.

Le matériau constituant le guide est un matériau translucide à indice de réfraction $\underline{n}$ élevé, compris entre 1,40 et 1,65, choisi parmi les polymères organiques bien connus qui permettent par réflexion totale interne (TIR) de propager le long du guide au moins une partie de l'énergie lumineuse admise à une extrémité à partir d'une source lumineuse. De tels polymères organiques sont par exemple choisis parmi les polymères acryliques, notamment le polyméthylméthacrylate (PMMA), le polycarbonate et les polyesters.

La source lumineuse 2 est une source lambertienne quasi-ponctuelle, telle qu'une diode en AlGaAs émettant à 650 nm sous une tension de 1,65 V ou une diode en InGaN émettant à 470 nm sous une tension de 3,5 V.

Le guide 10 s'étend au-dessus de la surface 4 selon une ligne longitudinale 1, représentée en pointillés, pouvant avoir une forme quelconque. Il peut être considéré comme une succession de blocs élémentaires rectilignes en forme de barreaux $B_1,...B_i$, $B_{i+1}$ ... tel que celui représenté à plus grande échelle à la figure 2.

Chaque bloc élémentaire $B_i$ comprend au moins un dièdre d'angle plan $\delta$ dont une première face 14 est sensiblement parallèle à la surface à illuminer 4 et dont une deuxième face 15 est sensiblement perpendiculaire à ladite surface 4. Les surfaces 16 et 17 qui rejoignent les faces 14 et 15 de chaque bloc élémentaire $B_i$ pour en constituer l'enveloppe pourraient avoir une forme quelconque étant donné qu'elles ne participent pas directement à l'orientation des rayons émergents en incidence rasante sur la surface 4 à illuminer.

Comme cela sera expliqué plus en détails par la suite, cette orientation des rayons émergents est obtenue grâce à un ou plusieurs microprismes 20, 20a, 20b,... structurés en creux sur la première face 14 de chaque bloc élémentaire $B_i$, dont une facette 21 est dirigée vers la source lumineuse. L'orientation de cette facette 21 est déterminée de façon précise, comme cela sera montré par la suite à titre d'exemple, par les choix qu'on fait au niveau du matériau utilisé pour le guide, et plus précisément de la valeur de l'indice de réfraction $\underline{n}$ dudit matériau, au niveau de la forme de la section droite du guide, et plus précisément de la valeur de l'angle plan $\delta$ du dièdre et au niveau de l'étendue de la surface à illuminer, c'est à dire de l'angle $\theta_1$ sous lequel on souhaite que les rayons émergents viennent frapper ladite surface 4. Cette orientation précise de la facette 21 peut être déterminée à partir des paramètres précités, qui permettront de calculer d'une part l'angle $\overline{\alpha}$ formé dans le plan de la première face 14 du guide par l'arête 22 de la facette 21 du microprisme considéré et par l'axe Oz de propagation de la lumière dans le bloc élémentaire correspondant, d'autre part par l'angle $\overline{\gamma}$ formé dans le , plan de la deuxième face 15 du guide par le bord 23 de la facette 21 et par la direction normale 0y à la surface à illuminer.

Les angles $\overline{\alpha}$ et $\overline{\gamma}$ peuvent également être exprimés à partir des cosinus directeurs K, L, M, de la normale à ladite facette, lesdits cosinus directeurs étant eux-mêmes calculés à partir desdits paramètres $\underline{n}$, $\delta$ et $\theta_1$, comme expliqué à titre d'exemple ci-après.

Chaque bloc élémentaire du guide a une section carrée de 1,5 mm de côté, (le paramètre $\delta$ a alors pour valeur $\Pi/2$), et est réalisé en PMMA d'indice de réfraction n=1,49. Ce bloc est repéré dans un référentiel x, y, z dans lequel l'axe z est parallèle à l'axe longitudinal du bloc, le plan xz est parallèle à la surface 4 à illuminer et le plan xy est parallèle à la section droite. La lumière émise par la source 2 pénètre dans le bloc en formant un cône d'angle critique

$$\theta_c = \arcsin\left(\frac{1}{n}\right) = 42,20°$$ dont on ne retient pour la suite que le demi-cône supérieur, en considérant que les rayons du demi-cône inférieur ne frappent pas directement la facette 21. Ce demi-cône permet de définir un rayon médian $\overline{s}$, représenté dans le plan yz, et formant donc un angle de $\theta_c/2 = 21,1°$. Le vecteur représentant le rayon lumineux $\overline{s}$, qui sera après réflexion par la facette 21 du microprisme réfléchi en un rayon $\overline{s}$' a donc pour cosinus directeurs

$$\overline{s} = \left\{\begin{array}{c} 0 \\ \sin 21,1° \\ \cos 21,1° \end{array}\right\} = \left\{\begin{array}{c} 0 \\ 0,36 \\ 0,933 \end{array}\right\}$$

On impose d'autre part au rayon médian émergeant hors du guide $\overline{s}$", qui correspond au rayon $\overline{s}$' après réfraction, d'être dans un plan parallèle au plan xy et de former un angle $\theta_1 = 10°$ avec la surface 4 à illuminer. L'angle $\theta_1$ (non représenté) formé par rayon incident $\overline{s}$' à l'intérieur du guide est donc

$$\theta_i' \approx \left(\frac{\sin(-10°)}{n}\right) = -6,69°,$$

ce qui correspond dans le sens trigonométrique à un angle de +173,31°. Il en résulte que le vecteur $\overline{s}$' a pour cosinus directeurs

$$\overline{s}' = \left\{\begin{array}{c} \cos 353,31° \\ \sin 353,31° \\ 0 \end{array}\right\} = \left\{\begin{array}{c} -0,993 \\ +0,117 \\ 0 \end{array}\right\}$$

Connaissant les paramètres du rayon incident $\overline{s}$ et du rayon réfléchi $\overline{s}$' par la facette 21, il est alors possible de calculer les cosinus directeurs K, L, M du vecteur $\overline{r}$ normal à la facette 21, en appliquant la loi vectorielle de la réflexion $\overline{s}$' = $\overline{s}$-2a$\overline{r}$, dans laquelle $\underline{a}$ représente

$$a = \frac{kK + lM + mM}{K^2 + L^2 + M^2},$$

k, l, m et K, L, M étant respectivement les cosinus directeurs des vecteurs $\overline{s}$' et $\overline{r}$.
Les cosinus directeurs du vecteur $\overline{r}$ normal à la surface de la facette 21 peuvent ainsi être déterminés comme étant égaux à :

$$\overline{r} = \left\{\begin{array}{c} K \\ L \\ M \end{array}\right\} = \left\{\begin{array}{c} 0,688 \\ 0,33 \\ 0,646 \end{array}\right\}$$

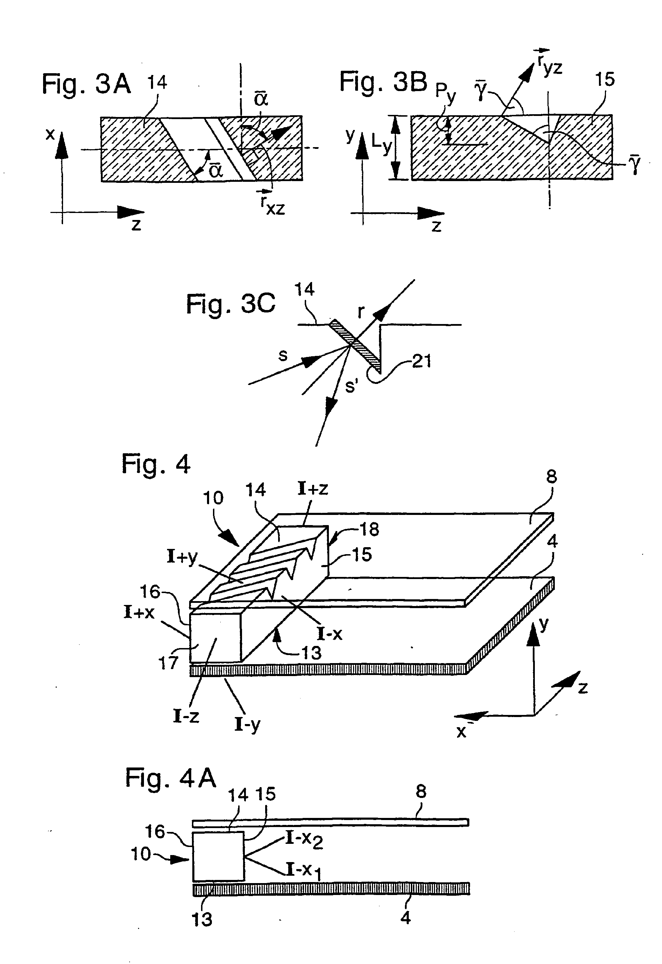

En se référant plus particulièrement à la figure 3A, on voit que l'angle $\overline{\alpha}$, qui représente l'inclinaison de l'arête 22 des microprismes le long du guide, correspond à l'angle formé par la projection du vecteur normal $\overline{r}$ dans le plan xz et a donc pour valeur exprimée dans le sens trigonométrique :

$$\overline{\alpha} = \arccos\left(\frac{K}{\sqrt{K^2 + M^2}}\right) = 43,21°$$

De même, en se référant plus particulièrement à la figure 3B, on voit que l'angle $\overline{\gamma}$, qui représente l'inclinaison du bord 23 des microprismes sur la face 15 du guide, correspondant à l'angle formé par la projection du vecteur normal $\overline{r}$ dans le plan xz et a donc pour valeur exprimée dans le sens trigonométrique :

$$\overline{\gamma} = \arccos\left(\frac{M}{\sqrt{L^2 + M^2}}\right) = 27,04°$$

Pour définir complétement la géométrie du guide, il convient encore de choisir la profondeur Py des microprismes. Si Ly est la hauteur, il est souhaitable, pour éviter un effet d'ombre, d'avoir la relation $\frac{Py}{Ly} \leq \frac{1}{10}$, relation qui n'a pas été respectée à la figure 3B pour une meilleure compréhension du dessin. Dans l'exemple choisi (barreau de section 1,5 x 1,5 mm$^2$), la profondeur ne devrait donc pas dépasser 150$\mu$m.

En se référant maintenant plus particulièrement à la figure 4, on a représenté une portion d'un dispositif d'illumination ayant un guide en PMMA rectiligne de section carrée 2x2 mm, et de longueur 50 mm, les microprismes étant structurés selon les caractéristiques précédentes dans 30 blocs élémentaires de longueur $\Delta z$=1 mm, le premier bloc étant positionné à 10 mm de la source. La densité des microprismes, c'est-à-dire le nombre moyen de microprismes par bloc élémentaire augmente de la valeur 1 pour le premier bloc jusqu'à la valeur 4 pour le dernier bloc de sorte qu'on ait en tout 56 microprismes. La répartition précise de ces microprismes le long du guide peut être déterminée en tenant compte du coefficient d'absorption propre au PMMA (0,000228 mm$^{-1}$) et en faisant en sorte que l'énergie lumineuse $I_i$ émise par chaque bloc élémentaire $B_i$ soit la même pour tous les blocs formant le guide. Avec ce dispositif d'illumination on a mesuré au moyen de capteurs d'énergie le découplage du flux lumineux par chaque face du guide :

I-x : flux émergeant de la face 15 et permettant d'illuminer la surface 4,
I+x : flux émergeant de la face 16 opposée à la face 15,
I-y : flux émergeant de la face 13 opposée à la face 14 comportant les microprismes,
I+y : flux émergeant de la face 14 comportant les microprismes,
I-z : flux émergeant de la face 17 à l'entrée du guide où est disposée la source lumineuse,
I+z : flux émergeant de la face 18 à l'autre extrémité du guide.

Dans une première expérience, aucune surface du guide ne comporte de revêtement réfléchissant.
Dans une deuxième expérience, on a déposé sur les facettes 21 des microprismes un revêtement d'aluminium.
Dans une troisième expérience, le dépôt de revêtement d'aluminium a été effectué sur toute la première surface 14, y compris sur les facettes 21 des microprismes.
Les résultats de ces trois expériences sont rapportées dans le tableau ci-après, en indiquant à titre de témoin les résultats observés avec un barreau ayant les mêmes caractéristiques (indices de réfraction et géométrie du guide), mais ne comportant aucun microprisme, et aucun revêtement réfléchissant.

| Expérience | I-x | I+x | I-y | I+y | I-z | I+z | I total émergeur |
|---|---|---|---|---|---|---|---|
| 1 | 44,11% | 6,03% | 10,58% | 6,76% | 7,70% | 21,75% | 96,93% |
| 2 | 56,04% | 5,25% | 9,38% | 1,22% | 8,39% | 10,53% | 90,81% |
| 3 | 47,69% | 3,63% | 6,60% | 0,35% | 7,82% | 7,47% | 73,56% |

(suite)

| Expérience | I-x | I+x | I-y | I+y | I-z | I+z | I total émergeur |
|---|---|---|---|---|---|---|---|
| témoin* | 15% | 15% | 15% | 15% | 10% | 30% | 100% |
| (*compte tenu de la faible longueur du guide, les pertes par absorption sont négligeables) | | | | | | | |

Par rapport au témoin, on constate que la valeur de découplage I-x est augmentée et que cette augmentation est accrue lorsque les microprismes ont en plus un revêtement réfléchissant. On observera toutefois que le flux total émergent diminue de façon significative lorsqu'on a un revêtement réfléchissant.

Dans la deuxième expérience on a également, par une disposition appropriée des capteurs, mesuré quelle était dans la valeur de découplage I-x la quantité d'énergie $I\text{-}x_1$ dirigée vers la surface à illuminer 4 et quelle était la quantité $I\text{-}x_2$ dirigée vers une surface supérieure 8 parallèle à la surface 4, comme représenté à la figure 2A.

Pour $I\text{-}x_1$ on a obtenu la valeur 52,33% et pour $I\text{-}x_2$ la valeur 3,71%, ce qui montre que la disposition particulière des microprismes selon l'invention contribue de façon très significative à orienter le faisceau lumineux émergeant de la face 21 du guide vers la surface à illuminer.

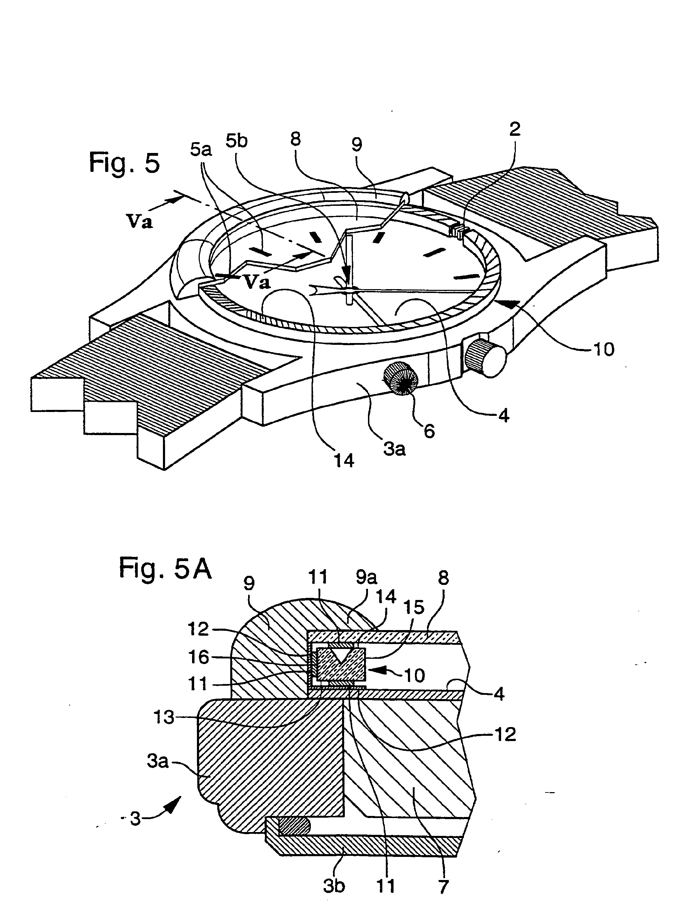

En se référant maintenant aux figures 5 et 5A, on a représenté l'application d'un dispositif d'illumination orienté selon l'invention à l'éclairage du cadran d'une montre-bracelet de type courant. Elle comporte un boîtier 3 de forme circulaire, constitué par une carrure 3a obturée par un fond 3b et contenant un mouvement horloger et une source d'énergie 7 permettant d'alimenter au moins le dispositif d'illumination. L'affichage de l'heure s'effectue sur un cadran 4, par exemple en mode analogique au moyen d'aiguilles 5a et au moyen de repères horaires 5b disposés sur le pourtour du cadran 4. L'affichage est obturé par une glace 8 maintenue en place par une lunette 9 dont une extension 9a recouvre partiellement un anneau de ladite glace 8 et du cadran 4, en étant rendue solidaire du boîtier par tout moyen approprié. La partie dans laquelle la glace 8 et la lunette 9 ont partiellement été arrachées laisse apparaître le guide optique 10, de forme annulaire à section droite rectangulaire, logé dans l'espace délimité par la lunette 9 et les faces en regard du cadran 4 et de la glace 8. Comme cela apparaît plus clairement à la figure 3A, le guide 10 est maintenu dans son logement par des espaceurs 11, disposés de place en place de façon à ménager un petit espace d'air entre les surfaces 13, 14, et 16 du guide et les parois en regard. On a en outre disposé des surfaces miroir 12 en regard des faces non actives 13 et 16 pour réfléchir les rayons qui s'échapperaient du guide. Ces surfaces miroir sont par exemple réalisées dans des feuilles de PET à revêtement d'argent.

Comme représenté à la figure 5, le guide présente, sensiblement à la position 12h, une interruption formant un logement pour loger une source lumineuse 2, formée par deux diodes disposées dos à dos, ladite source lumineuse pouvant par exemple être enclenchée à la demande par actionnement d'un bouton-poussoir 6 disposé sur la carrure 3a.

La face supérieure 14 du guide comporte des microprismes tels que décrits précédemment et dont l'angle d'inclinaison $\overline{\alpha}$ dans le plan zx est défini à partir d'une tangente à l'anneau circulaire formant le guide.

Comme on le voit, les microprismes sont alors répartis de façon symétrique par rapport à l'axe 6h-12h et leur densité augmente au fur et à mesure qu'on se rapproche de la position 6h.

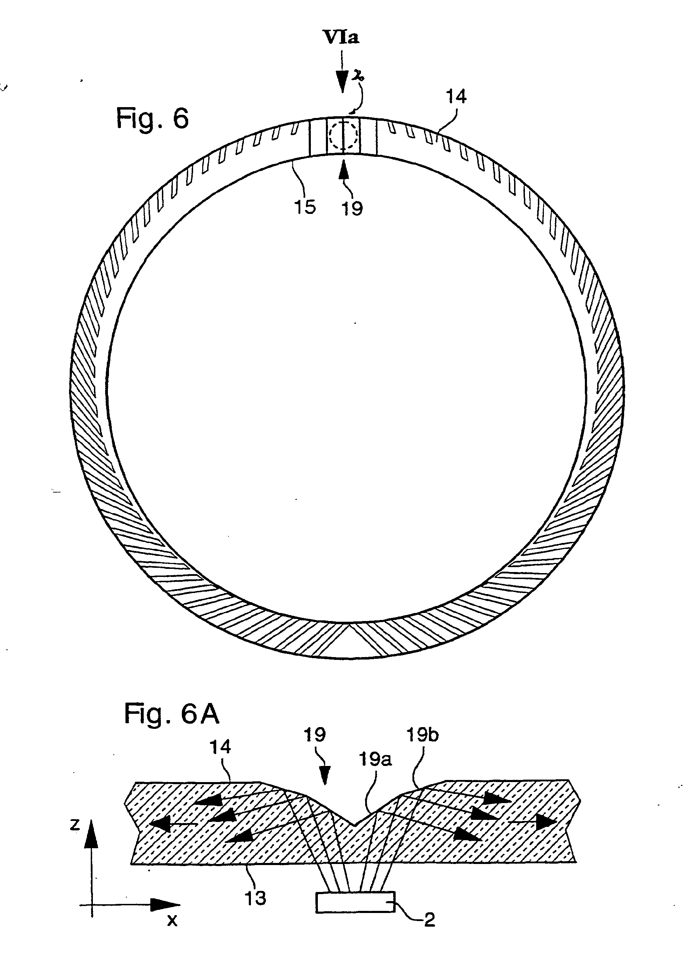

A la figure 6 on a représenté en vue de dessus un mode de réalisation d'un guide annulaire pouvant également être utilisé pour illuminer le cadran d'une montre, et, dans lequel les microprismes sont régulièrement espacés, mais ont une longueur qui augmente depuis l'extérieur vers l'intérieur, c'est-à-dire vers la surface à illuminer, au fur et à mesure qu'on s'éloigne de la source lumineuse 2. Selon une autre caractéristique de ce mode de réalisation la source lumineuse est formée par une seule diode disposée selon l'axe 0y en regard de la face 13 opposée à la face 14 comportant les microprismes et ladite face 14 comporte une découpe en dièdre 19 selon un angle tel que le faisceau incident soit découplé par réflexion totale interne en deux demi-faisceaux injectés dans deux demi-portions du guide. La vue de côté représentées à la figure 6A correspond à ce mode de réalisation dans lequel le dièdre 19 est en fait un double dièdre dans lequel chaque face est formée de deux facettes 19a et 19b d'orientations différentes et permettant encore mieux de prendre en compte la dispersion du rayon issus de la source lumineuse.

Comme on peut le comprendre, les exemples de réalisation qui viennent d'être décrits peuvent donner lieu à de nombreuses variantes, sans sortir du cadre de l'invention.

**Revendications**

1. Dispositif d'illumination orientée d'une surface plane (4) sous un angle d'incidence moyen $\theta_1$ par au moins une source lumineuse lambertienne (2) au moyen d'un guide optique (10) plein à microprismes (20) s'étendant selon un axe Oz avec une section droite constante, ledit guide étant réalisé en un matériau d'indice de réfraction n élevé auquel correspond un angle critique $\theta_c$, ladite section droite ayant au moins un angle plan δ dont un côté engendre une première face plane (14) du guide (20) sensiblement parallèle à la surface à illuminer et dont l'autre côté engendre une deuxième face plane (15) sensiblement perpendiculaire à ladite surface, **caractérisé en ce que** les microprismes (20) sont formés de deux facettes (21, 25) structurées en creux sur la première face (14) et **en ce que** la facette (21) orientée vers la source lumineuse (2) est inclinée vers la deuxième face (15) selon une inclinaison définie d'une part par l'angle $\overline{\alpha}$ défini dans le plan de la première face (14) par une arête (22) du microprisme (20) et par l'axe Oz au niveau du microprisme considéré, et d'autre part par un angle $\overline{\gamma}$ défini dans le plan de la deuxième face (15) par le bord (23) de ladite facette (21) et par la direction normale Oy à la surface à illuminer, les angles $\overline{\alpha}$ et $\overline{\gamma}$ étant déterminables à partir des caractéristiques $\underline{n}$, $\theta_1$ et $\delta$ retenues pour le dispositif d'illumination.

2. Dispositif d'illumination selon la revendication 1, **caractérisé en ce que** les angles $\overline{\alpha}$ et $\overline{\gamma}$ sont déterminés à partir des cosinus directeurs K, L, M de la normale à la facette (21) des microprismes (20), lesdits cosinus directeurs étant eux-mêmes calculés à partir des paramètres $\underline{n}$, $\theta_1$ et $\delta$.

3. Dispositif d'illumination selon la revendication 1, **caractérisé en ce que** les faces 14 et 15 ont, l'une ou l'autre ou ensemble, une inclinaison variant de 0° à -10° par rapport à une position préférée dans laquelle elles forment un angle plan $\delta=\Pi/2$, lesdites faces étant alors respectivement parallèle et perpendiculaire à la surface (4) à illuminer.

4. Dispositif d'illumination selon la revendication 3, **caractérisé en ce que** la section droite du guide est un quadrilatère rectangle.

5. Dispositif d'illumination selon la revendication 1, **caractérisé en ce que** la ligne longitudinale Oz du guide (10) est une ligne rectiligne, l'angle $\overline{\alpha}$ étant alors défini par rapport à ladite ligne rectiligne.

6. Dispositif d'illumination selon la revendication 1, **caractérisé en ce que** la ligne longitudinale du guide (10) est une ligne circulaire, l'angle $\overline{\alpha}$ étant alors défini par rapport à une tangente au point de courbure du microprisme (20) considéré.

7. Dispositif d'illumination selon la revendication 1, **caractérisé en ce que** le nombre de microprismes (20) par unité de longueur augmente au fur et à mesure qu'on s'éloigne de la source lumineuse (2).

8. Dispositif d'illumination selon la revendication 1, **caractérisé en ce que** les microprismes (20) sont régulièrement espacés le long du guide, mais ont une longueur qui augmente depuis l'extérieur vers la surface (4) à illuminer au fur et à mesure qu'on s'éloigne de la source lumineuse (2).

9. Dispositif d'illumination selon la revendication 1, **caractérisé en ce que** la deuxième facette (25) de chaque microprisme (20) est perpendiculaire à la surface (4) à illuminer.

10. Dispositif d'illumination selon la revendication 1, **caractérisé en ce que** la deuxième facette (25) de chaque microprisme (20) est symétrique de la première facette (21) par rapport à la section droite du guide.

11. Dispositif d'illumination selon la revendication 1, **caractérisé en ce qu'**au moins la première facette (21) de chaque microprisme (20) est revêtue d'un revêtement réfléchissant.

12. Dispositif d'illumination selon la revendication 1, **caractérisé en ce que** les microprismes (20) sont conformés par gravage direct ou indirect, tels qu'un usinage mécanique ou une attaque à travers des masques par des moyens chimiques ou par des rayons laser.

13. Dispositif d'illumination selon la revendication 1, **caractérisé en ce que** les microprismes (20) sont obtenus à partir d'une matrice permettant de conformer lesdits microprismes (20) par injection dans un moule incorporant ladite matrice ou par utilisation de ladite matrice pour estamper une surface.

14. Dispositif d'illumination selon les revendications 12 ou 13, **caractérisé en ce que** les microprismes (20) sont conformés directement dans le matériau formant le guide.

15. Dispositif d'illumination selon les revendications 12 ou 13, **caractérisé en ce que** les microprismes (20) sont conformés sur une plaque en un matériau ayant un indice de réfraction identique ou voisin de celui du guide, ladite plaque étant ensuite appliquée sur la première face du guide.

**16.** Dispositif d'illumination selon la revendication 1, **caractérisé en ce que** le guide est formé par un matériau polymère organique ayant un indice de réfraction n compris entre 1,40 et 1,65.

**17.** Dispositif d'illumination selon la revendication 3, **caractérisé en ce que** l'angle d'inclinaison $\overline{\alpha}$ a pour valeur 47° et l'angle d'inclinaison $\overline{\gamma}$ a pour valeur 27° lorsque le matériau formant le guide est du PMMA d'indice de réfraction n=1,49 et qu'on choisit $\theta_i$=10°.

**18.** Dispositif d'illumination selon la revendication 1, **caractérisé en ce que** la source lumineuse (2) est formée par deux diodes disposées dos à dos selon l'axe Oz du guide.

**19.** Dispositif d'illumination selon la revendication 1, **caractérisé en ce que** la source lumineuse (2) est formée par une seule diode disposée selon l'axe Oy en regard de la face 13 opposée à la face 14 comportant les microprismes (20) et **en ce que** ladite face (14) comporte une découpe (19) en dièdre ou polydièdre permettant de séparer le faisceau lumineux dans deux demi-moitiés du guide.

**20.** Pièce d'horlogerie comprenant un boîtier destiné à recevoir un mécanisme horloger, ledit boîtier étant obturé par une glace disposée au-dessus d'un cadran pour l'affichage analytique ou digital de l'heure, **caractérisé en ce que** le cadran est éclairé par un dispositif d'illumination selon une quelconque des revendications 1 à 19.

**Claims**

**1.** Oriented illumination device for a plane surface (4) under a mean incidence angle $\theta_1$ by at least one lambertian light source (2) by means of a solid optical guide (10) with microprisms (20) extending along an axis Oz with a constant cross-section, said guide being made of a material with a high refractive index $\underline{n}$, to which a critical angle $\theta_c$ corresponds, said cross section having at least one plane angle $\delta$ one side of which generates a first plane face (14) of the guide (20) substantially parallel to the surface to be illuminated and the other side of which generates a second plane face (15) substantially perpendicular to said surface, **characterised in that** the microprisms (20) are formed of two facets (21, 25) structured in hollows on the first face (14) and **in that** one facet (21) oriented towards the light source (2) is inclined towards the second face (15) so that the middle beam emerging from said face (15) strikes the surface (4) at an angle $\theta_1$, said inclination being defined on the one hand by the angle $\overline{\alpha}$ defined in the plane of the first face (4) by an edge (22) of the microprism (20) and by the axis Oz at the microprism in question, and on the other hand by the angle $\overline{\gamma}$ defined in the plane of the second face (15) by the edge (23) of said facet (21) and by the direction Oy perpendicular to the surface to be illuminated, angles $\overline{\alpha}$ and $\overline{\gamma}$ being determined from the characteristics $\underline{n}$, $\theta_1$ and $\delta$ retained for the illumination device.

**2.** Illumination device according to claim 1, **characterised in that** the angles $\alpha$ and $\gamma$ are determined from direction cosines K, L, M of the perpendicular to the facet (21) of the microprisms (20), said direction cosines being themselves calculated from the parameters $\underline{n}$, $\theta_1$ and $\delta$.

**3.** Illumination device according to claim 1, **characterised in that** one or the other or both of faces 14 and 15 have an inclination varying from 0° to -10° with respect to a preferred position in which they form a plane angle $\delta=\Pi/2$, said faces being then respectively parallel and perpendicular to the surface (4) to be illuminated.

**4.** Illumination device according to claim 3, **characterised in that** the cross-section of the guide is a four-sided rectangle.

**5.** Illumination device according to claim 1, **characterised in that** the longitudinal line Oz of the guide (10) is a rectilinear line, the angle $\alpha$ being then defined with respect to said rectilinear line.

**6.** Illumination device according to claim 1, **characterised in that** the longitudinal line of the guide (10) is a circular line, the angle $\overline{\alpha}$ then being defined with respect to a tangent at the point of curvature of the microprism (20) in question.

**7.** Illumination device according to claim 1, **characterised in that** the number of microprisms (20) per unit of length increases progressively as one moves away from the light source (2).

**8.** Illumination device according to claim 1, **characterised in that** the microprisms (20) are regularly distributed along the guide, but have a length which increases from the exterior towards the surface (4) to be illuminated progressively as one moves away from the light source (2).

9. Illumination device according to claim 1, **characterised in that** the second facet (25) of each microprism (20) is perpendicular to the surface (4) to be illuminated.

10. Illumination device according to claim 1, **characterised in that** the second facet (25) of each microprism (20) is symmetrical to the first facet (21) with respect to the cross-section of the guide.

11. Illumination device according to claim 1, **characterised in that** at least the first facet (21) of each microprism (20) is coated with a reflective coating.

12. Illumination device according to claim 1, **characterised in that** the microprisms (20) are formed by direct or indirect engraving, such as mechanical machining or etching through masks by chemical means or laser beams.

13. Illumination device according to claim 1, **characterised in that** the microprisms (20) are obtained from a die allowing said microprisms (20) to be formed by injection into a mould incorporating said die or by using said die to stamp a surface.

14. Illumination device according to claims 12 or 13, **characterised in that** the microprisms (20) are formed directly in the material forming the guide.

15. Illumination device according to claims 12 or 13, **characterised in that** the microprisms (20) are formed on a plate of a material having an identical or close refractive index to that of the guide, said plate being then applied onto the first face of the guide.

16. Illumination device according to claim 1, **characterised in that** the guide is formed by an organic polymer material having a refractive index $\underline{n}$ comprised between 1.40 and 1.65.

17. Illumination device according to claim 3, **characterised in that** the angle of inclination $\overline{\alpha}$ has the value 47° and the angle of inclination $\overline{\gamma}$ has the value 27° when the material forming the guide is PMMA with a refractive index of n=1.49 and one selects $\theta_1$=10°.

18. Illumination device according to claim 1, **characterised in that** the light source (2) is formed by two diodes arranged back-to-back along the axis Oz of the guide.

19. Illumination device according to claim 1, **characterised in that** the light source (2) is formed by a single diode arranged along the axis Oy facing the face 13 opposite face 14 including the microprisms (20) and **in that** said face (14) includes a cut in a dihedron or polydihedron shape allowing the light beam to be separated into two semi-halves of the guide.

20. Timepiece including a case intended to accommodate a clockwork mechanism, said case being sealed by a crystal arranged above a dial for the analogue or digital display of the time, **characterised in that** the dial is illuminated by an illumination device according to any of claims 1 to 19.

**Patentansprüche**

1. Vorrichtung zur orientierten Beleuchtung einer ebenen Fläche (4) unter einen durchschnittlichen Einfallwinkel $\theta_1$. durch wenigstens eine Lambert'sche Lichtquelle (2), mittels eines vollen optischen Leiters (10) mit Mikroprismen (20), die sich entlang einer Oz Achse mit einem konstanten Querschnitt erstrecken, wobei der Leiter aus einem Material mit einem hohen Brechungsindex $\underline{n}$ erstellt ist, dem ein kritischer Brechungswinkel $\theta_c$ entspricht, wobei der besagte Querschnitt wenigstens einen ebenen Winkel $\delta$ hat, dessen eine Seite eine erste ebene Fläche (14) des Leiters (20) generiert, die im Wesentlichen parallel zu der Fläche (4) ist, die beleuchtet werden soll, , und dessen andere Seite eine zweite ebene Fläche (15) generiert, die im Wesentlichen senkrecht zur besagten Fläche (4) ist, **dadurch gekennzeichnet, dass** die Mikroprismen (20) durch zwei in Vertiefungen strukturierten Facetten (21, 25) auf der ersten Fläche (14) geformt sind, und dass die Facette (21), die in Richtung der Lichtquelle (2) orientiert ist, in Richtung der zweiten Flächen (15) schräggestellt ist, gemäss einer Neigung, die einerseits durch einen Winkel $\overline{\alpha}$ definiert wird, der in der Ebene des ersten Fläche (14) durch eine Kante (22) des Mikroprismas und die Oz Achse definiert ist, und andererseits durch einen Winkel $\overline{\gamma}$ definiert wird, der in der Ebene der zweiten Fläche (15) durch die Kante (23) der besagten Facette (21) und die Richtung Oy senkrecht zu der zu beleuchtenden Fläche, definiert ist, wobei die Winkel $\overline{\alpha}$ und $\overline{\gamma}$ aus den Merkmalen $\underline{n}$, $\theta_1$ und $\delta$ bestimmt werden können, die für die Beleuchtungsvorrichtung festgelegt sind.

2. Beleuchtungsvorrichtung gemäss Anspruch 1, **dadurch gekennzeichnet, dass** die Winkel $\overline{\alpha}$ und $\overline{\gamma}$ durch die leitenden Kosinus K, L, M der Normalen der Facette (21) des Mikroprismas (20) bestimmt werden, wobei die besagten leitenden Kosinus selber aus den Parametern $\underline{n}$, $\theta_1$ und $\delta$ berechnet sind.

3. Beleuchtungsvorrichtung gemäss Anspruch 1, **dadurch gekennzeichnet, dass** die eine oder die andere Fläche 14 oder 15, oder beide, eine Neigung aufweisen, die zwischen 0° und -10° von einer bevorzugten Position abweichen , in welcher sie einen ebenen Winkel von $\delta=\Pi/2$ bilden, wobei die besagten Flächen dann jeweils parallel und senkrecht gegenüber der zu beleuchtenden Fläche (4) sind.

4. Beleuchtungsvorrichtung gemäss Anspruch 3, **dadurch gekennzeichnet, dass** der Querschnitt des Leiters ein rechtwinkliges Viereck ist.

5. Beleuchtungsvorrichtung gemäss Anspruch 1, **dadurch gekennzeichnet, dass** die longitudinale Oz-Linie des Leiters (10) geradlinig ist, wobei der Winkel $\overline{\alpha}$ dann in Bezug auf die besagte gerade Linie definiert ist.

6. Beleuchtungsvorrichtung gemäss Anspruch 1, **dadurch gekennzeichnet, dass** die longitudinale Oz-Linie des Leiters (10) kreisförmig ist, wobei der Winkel $\overline{\alpha}$ dann in Bezug auf eine Tangente an der Krümmungsstelle des betrachteten Mikroprismas (20) definiert ist.

7. Beleuchtungsvorrichtung gemäss Anspruch 1, **dadurch gekennzeichnet, dass** die Anzahl von Mikroprismen (20) pro Längeneinheit mit dem Abstand von der Lichtquelle (2) allmählich ansteigt.

8. Beleuchtungsvorrichtung gemäss Anspruch 1, **dadurch gekennzeichnet, dass** die Mikroprismen (20) in regelmäßigen Abständen an dem Leiter entlang verteilt sind, aber mit einer Länge, die mit der Abstand von der Lichtquelle (2) vom Äusseren in die Richtung der zu beleuchtenden Fläche (4) allmählich ansteigt .

9. Beleuchtungsvorrichtung gemäss Anspruch 1, **dadurch gekennzeichnet, dass** die zweite Facette (25) von jedem Mikroprisma (20) senkrecht zu der zu beleuchtenden Fläche (4) ist.

10. Beleuchtungsvorrichtung gemäss Anspruch 1, **dadurch gekennzeichnet, dass** die zweite Facette (25) von jedem Mikroprisma (20) symmetrisch zu der ersten Facette (21) in Bezug auf den Querschnitt des Leiters ist.

11. Beleuchtungsvorrichtung gemäss Anspruch 1, **dadurch gekennzeichnet, dass** wenigstens die erste Facette (21) von jedem Mikroprisma (20) mit einer reflektierenden Beschichtung versehen ist.

12. Beleuchtungsvorrichtung gemäss Anspruch 1, **dadurch gekennzeichnet, dass** die Mikroprismen (20) durch direktes oder indirektes Gravur, so wie mechanische Bearbeitung oder Ätzen durch Masken mit chemischen Mitteln oder Laserstrahlen angepasst sind.

13. Beleuchtungsvorrichtung gemäss Anspruch 1, **dadurch gekennzeichnet, dass** die Mikroprismen (20) von einer Matrix erzeugt werden, die es erlaubt, die Mikroprismen (20) durch Einspritzung in eine Gussform, die die Matrix einbezieht, zu formen, oder indem die besagte Matrix benutzt wird, um eine Fläche zu prägen.

14. Beleuchtungsvorrichtung gemäss Anspruch 12 oder 13, **dadurch gekennzeichnet, dass** die Mikroprismen (20) direkt in dem Material geformt werden, das den Leiter bildet,.

15. Beleuchtungsvorrichtung gemäss Anspruch 12 oder 13, **dadurch gekennzeichnet, dass** die Mikroprismen (20) in einer Platte geformt werden, deren Material einen identischen oder ähnlichen Brechungsindex aufweist wie der Leiter, wobei die Platte dann auf die erste Fläche des Leiters aufgesetzt wird.

16. Beleuchtungsvorrichtung gemäss Anspruch 1, **dadurch gekennzeichnet, dass** der Leiter aus einem organischen Polymermaterial besteht, das einen Brechungsindex $\underline{n}$ zwischen 1.40 und 1.65 hat.

17. Beleuchtungsvorrichtung gemäss Anspruch 3, **dadurch gekennzeichnet, dass** der Neigungswinkel $\overline{\alpha}$ einen Wert von 47° hat und der Neigungswinkel $\overline{\gamma}$ einen Wert von 27° hat wenn das den Leiter bildende Material PMMA mit einem Brechungsindex von n=1.49 ist und $\theta_1$=10° ausgewählt wird.

**18.** Beleuchtungsvorrichtung gemäss Anspruch 1, **dadurch gekennzeichnet, dass** die Lichtquelle (2) durch zwei Dioden geformt ist, die Rücken an Rücken entlang der Oz-Achse angeordnet sind.

**19.** Beleuchtungsvorrichtung gemäss Anspruch 1, **dadurch gekennzeichnet, dass** die Lichtquelle (2) durch eine einzige Diode geformt ist, die entlang der Oy-Achse gegenüber der Fläche (13) angeordnet ist, die der Fläche (14), die die Mikroprismen (20) beinhaltet, entgegengesetzt ist, und dass die besagte Fläche (14) einen Dieder- oder Polyederförmigen Abschnitt (19) beinhaltet, der es erlaubt, den Lichtstrahl in zwei Hälften des Leiters zu verteilen.

**20.** Uhr umfassend ein Gehäuse, das dazu bestimmt ist, einen Uhrwerkmechanismus aufzunehmen, wobei das besagte Gehäuse durch ein Glas verschlossen ist, das über einem Zifferblatt für das analytische oder digitale Anzeigen der Zeit angeordnet ist, , **dadurch gekennzeichnet, dass** das Zifferblatt durch eine Beleuchtungsvorrichtung gemäss einem der Ansprüche 1 bis 19 beleuchtet ist.

Fig. 1

Fig. 2

## Fig. 3A

## Fig. 3B

## Fig. 3C

## Fig. 4

## Fig. 4A

Fig. 5

5a 5b 8 9 2

Va

Va

10

14 3a 6 4

Fig. 5A

9 11 9a 8
12 14 15
16
11 10 4
13
12
3a
3
3b 11 7

**VIa**

**Fig. 6**

14

15   19

**Fig. 6A**

14   19   19b

19a

z

x

13

2

**EP 1 050 711 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0860755 A
- US 5555109 A
- EP 0666247 A